# EUROPÄISCHE PATENTSCHRIFT

(11) **EP 1 454 118 B1**
(45) Veröffentlichungstag und Bekanntmachung des Hinweises auf die Patenterteilung: **29.03.2006**
(21) Anmeldenummer: 02794956.9
(22) Anmeldetag: 27.11.2002
(51) Int. Cl.: G01G 3/12, G01G 19/414

(54) **VORRICHTUNG ZUR MESSUNG EINER KRAFT- ODER MOMENTENKOMPONENTE**
DEVICE FOR MEASURING A FORCE COMPONENT OR A TORQUE COMPONENT
DISPOSITIF POUR MESURER UNE COMPOSANTE DE FORCE OU DE MOMENT

(30) Priorität: 04.12.2001 DE 10159474
(43) Veröffentlichungstag der Anmeldung: 08.09.2004
(73) Patentinhaber: ROBERT BOSCH GMBH, 70442 Stuttgart (DE)
(72) Erfinder: MUNZ, Michael, 72764 Reutlingen (DE); WEIBLEN, Kurt, 72555 Metzingen (DE); STRATMANN, Andreas, 72810 Gomaringen (DE); WIEST, Gerhard, 72108 Rottenburg (DE); HAEUSSERMANN, Conrad, 72820 Sonnenbuehl (DE)
(86) Internationale Anmeldenummer: PCT/DE2002/004339
(87) Internationale Veröffentlichungsnummer: WO 2003/048699

(56) Entgegenhaltungen:
- EP-A- 0 751 381
- EP-A- 0 962 362
- WO-A-03/001162
- DE-A- 3 826 225
- DE-C- 4 420 691
- US-A- 5 624 132
- US-A- 6 129 168
- TECHNISCHES MESSEN TM., Bd. 54, Nr. 5, 1987, Seiten 200-203, XP002234445 R.OLDENBOURG VERLAG. MUNCHEN., DE ISSN: 0171-8096

## Beschreibung

Die Erfindung betrifft eine Vorrichtung zur Messung einer Kraft- oder Momentenkomponente nach dem Oberbegriff des Anspruch 1. Die Vorrichtung ist insbesondere dazu geeignet, die Gewichtskraft eines Objektes zu bestimmen.

Zur Messung von Kraftkomponenten sind eine Vielzahl an Vorrichtungen und Verfahren bekannt, die unter Ausnutzung verschiedener physikalischer Effekte das Ergebnis der Kraftmessung anzeigen bzw. bei denen die gemessene Kraftkomponente in ein einfach auswertbares Messsignal umgesetzt wird. Ein Beispiel dafür ist ein Zug-Druck-Kraftsensor, der nach dem Prinzip der Dehnmessstreifentechnik arbeitet. Auf einem kraftaufnehmenden Element sind Dehnungsmessstreifen aufgebracht und zu einer Vollbrücke geschaltet, die bei Krafteinwirkung ihren elektrischen Widerstand vergrößert und eine zur Messgröße proportionale Brückenausgangsspannung abgibt.

Um eine optimale Messgenauigkeit zu erreichen, dürfen jedoch keine Querkräfte oder Momente auf den Sensor ausgeübt werden, das heißt, die Krafteinleitung darf nur in einer definierten Richtung erfolgen. Zudem ist die Fertigung eines solchen Kraftsensors aufwendig, da die Dehnmessstreifen und die übrigen Komponenten des Kraftsensors zu einer komplexen Baugruppe zusammengestellt werden müssen.

Aus DE 38 26 225 A 1 ist eine Vorrichtung zur Kraftmessung mittels eines Verformungskörpers bekannt. Dabei ist eine Doppelbiegeplatte vorgesehen, die einen oberen Verformungskörper und einen unteren Verformungskörper aufweist. Unter einer Krafteinwirkung bewegt sich der Verformungskörper relativ zum unteren Verformungskörper, wobei diese Wegänderung in ein Messsignal umgesetzt wird. Dafür wird eine optische Messung vorgeschlagen. Aus Technisches Messen Vol. 54 (1987) Nr. 5, München Deutschland, G. Jäger: Lichtwellenleitergekoppelte interferenzoptische Kraftsensoren und Wägesysteme, Seiten 200-203 sind interferenzoptische Kraftsensoren bekannt, bei denen ein Querverformungs-körper vorgesehen ist, der u-förmig ausgebildet ist, wobei sich ein Teil der u-förmigen Körpers unter Krafteinwirkung gegenüber dem anderen Teil bewegt und diese Wegänderung optische gemessen wird.

Ausgehend von diesem Stand der Technik liegt der Erfindung die Aufgabe zugrunde, eine Vorrichtung und ein Verfahren zum Messen einer Kraft- oder Momentenkomponente bereitzustellen, mit der eine einfache, preiswerte und sichere Messung der Kraftkomponente erfolgen kann.

Erfindungsgemäß wird diese Aufgabe durch eine Vorrichtung mit den Merkmalen des Anspruchs 1 gelöst. Durch die Gestaltung eines Verformungskörpers mit einem Basisteil und zumindest einer zu dem Basisteil beweglichen Zunge wird ein Spalt ausgebildet, der in seiner Weite auf Grund des Einleitens einer Kraftkomponente veränderbar ist. Ein Messelement, das vorzugsweise berührungslos arbeitet, setzt die Veränderung der Spaltweite in ein Messsignal um.

Durch eine spiegelsymmetrische Anordnungen zweier Zungen, vorzugsweise mit Enden, die in einander entgegengesetzten Richtungen weisen, ist es möglich, dass bei einer ungleichmäßigen Belastung, beispielsweise eine Sitzschiene, auftretende Momente ermittelt und durch einen rechnerischen Abgleich die Gewichtskraft korrigiert ermittelt wird. Weiterhin sind Krafteinleitungsbereiche zur definierten Einleitung der Kraft in die Zunge vorgesehen, so dass eine präzise Zuordnung des Messelementes oder der Messelemente zu dem Ort der Verlagerung der Zunge erfolgen kann, wodurch die Messgenauigkeit erhöht wird.

Vorzugsweise ist zumindest eine Führungseinrichtung vorgesehen ist, die die Beweglichkeit der Zunge in zumindest einer Richtung begrenzt, so dass die Zunge nicht unbegrenzt beweglich ist. Durch die Führungseinrichtung bzw. durch die Führungseinrichtungen wird ausgeschlossen, dass einerseits durch Einleitung mehrerer Kraftkomponenten bzw. Kraftkomponenten verschiedener Orientierung die Zunge in ungeeigneter Art und Weise relativ zu dem Basisteil bewegt wird, wodurch das Messergebnis verfälscht wird oder dass andererseits das Messelement zerstört werden kann. Die Relativbewegung der Zunge zu dem Basisteil ist also eine geführte Bewegung, wodurch zudem eine erhöhte Sicherheit gegenüber einer mechanischen Zerstörung der Vorrichtung gegeben ist.

Vorteilhafterweise sind der Verformungskörper und das Messelement zusammen mit der Elektronikeinheit als getrennte Baugruppen ausgebildet, wodurch eine getrennte Fertigung der Baugruppen möglich ist. Dadurch wird es ermöglicht, dass die Herstellvorgänge der beiden Baugruppen separat voneinander optimiert werden können und lediglich die Endmontage, das heißt, der Einbau der Baugruppe mit dem Messelement und der Elektronikeinheit in den Verformungskörper als ein gemeinsamer Arbeitsschritt erfolgt.

Um eine besonders kompakte Bauweise zu erreichen und die Elektronikeinheit und das Messelement vor mechanischer Beschädigung zu schützen, ist es vorgesehen, dass das Messelement und die Elektronikeinheit innerhalb des Verformungskörpers angeordnet sind. Dadurch nimmt der Verformungskörper neben der Bereitstellung einer Referenzfläche für die Messung der Verlagerung der Zunge in Bezug auf das Basisteil zusätzlich eine Gehäusefunktion wahr.

In einer Weiterbildung ist vorgesehen, dass das Messelement ein integraler Bestandteil der Elektronikeinheit ist und beispielsweise als eine gedruckte Spule mit oder ohne Kern auf einer Leiterplatte aus Kunststoff, Keramik etc. ausgebildet ist.

Eine einstückige Ausbildung, beispielsweise durch Urformen oder durch Herausfräsen der Aufnahmen für die Baugruppe mit dem Messelement und der Elektronikeinheit erhöht die Stabilität des Verformungskörpers und insbesondere durch Herstellung mittels eines Urformverfahrens werden Arbeitsschritte und dadurch Fertigungszeit und Kosten eingespart. Weiterhin ist auf Grund der einstückigen Fertigung des Verformungskörpers aus dem Basisteil und der Zunge die Möglichkeit gegeben, die elastischen Eigenschaften des Werkstoffes des Verformungskörpers bei der Rückfederung der Zunge auszunutzen, wenn die Kraftkomponente bzw. die Kraftkomponenten nicht mehr eingeleitet werden.

Um eine geringe Wandstärke des Gehäuses auch bei hohen Belastungen realisieren zu können, ist der Verformungskörper aus Metall, insbesondere aus Stahl oder Edelstahl gefertigt, wobei insbesondere die elastischen Fähigkeiten eines metallischen Werkstoffes bei der Rückstellbewegung der Zunge in die Ausgangsposition von Vorteil ist.

Vorteilhafterweise ist das Messelement als Kondensator, Spule, Piezoelement oder Hallelement ausgebildet und arbeitet auf kapazitiver, induktiver, piezoelektrischer oder magnetoelastischer Basis. Bei einer Krafteinleitung auf die Zunge oder den Verformungskörper wird der Spalt zusammengedrückt, wobei die Bewegung in ein in der eingeleiteten Kraft proportionales, elektrisches Signal umgesetzt wird. Auf Grund der berührungslosen Messung wird ein Verschleißen des Messelementes bzw. der Vorrichtung nahezu ausgeschlossen und eine einfache Neukalibrierung ermöglicht.

In einer Weiterbildung ist vorgesehen, dass die Führungseinrichtung bzw. die Führungseinrichtungen aus einem mit dem Basisteil verbundenen Bolzen oder einer Abstandsbuchse, vorzugsweise einem runden Bolzen oder einer runden Abstandsbuchse mit einer T-förmigen Querschnitt, und einem an der Zunge oder dem Basisteil angeordneten oder ausgebildeten Durchlass besteht, der von dem Bolzen zumindest teilweise durchragt wird. Durch die Ausbildung der Führungseinrichtung als Bolzen ist eine Bewegungseinschränkung auf eine einzige Bewegungsrichtung, nämlich parallel zu der Längserstreckung des Bolzens möglich, wodurch eine präzise Messung der jeweiligen Kraftkomponente in Abhängigkeit von der Ausrichtung der Führungseinrichtung möglich ist. Je nach Orientierung der Führungseinrichtung bzw. des Bolzens kann die Richtung der Kraftkomponente ausgewählt und exakt bestimmt werden, da keine oder nur geringfügige Bewegungen zugelassen werden, die von einer senkrechten Bewegung auf das Basisteil abweicht. Insbesondere treten keine Biegemomente auf, die leicht zu einer Beschädigung der Vorrichtung und Verfälschung der Messergebnisse führen.

Eine Vorrichtung zur Begrenzung der Bewegung der Zunge in Richtung auf das Messelement oder das Basisteil ist vorgesehen, damit ein Überlastschutz des Messelements bzw. der gesamten Vorrichtung eingerichtet ist. Dadurch werden Kräfte, die oberhalb des festgelegten Messbereiches liegen, abgefangen, ohne dass die Vorrichtung bzw. der Sensor zerstört wird.

Je nach konstruktiver Ausgestaltung der Zunge bzw. des Basisteils ist es vorgesehen, dass die Spaltweite an den Messbereich angepasst wird, um eine Anwendung auf verschiedene Messzwecke zu ermöglichen. Bei einer mehrteiligen Ausbildung von Basisteil und Zunge kann dies durch eine Vergrößerung des Abstandes zwischen der Zunge und dem Basisteil mittels Distanzstücke erreicht werden, bei einer einstückigen Ausgestaltung kann die Zunge plastisch verformt werden, um die Spaltweite zu vergrößern bzw. kann der Spalt mittels einer spanenden Bearbeitung dauerhaft vergrößert werden. Eine Verkleinerung der Spaltweite ist beispielsweise durch separate Komponenten möglich, die an der Zunge befestigbar sind, wie zum Beispiel durch Aufkleben einer Platte oder Einstellen einer Justierschraube.

Alternativ dazu kann die Biegesteifigkeit der Zunge durch eine Materialschwächung oder das Einarbeiten von Bohrungen an verschiedenen Stellen mit einem angepassten Durchmesser verändert werden.

Insbesondere bei einer spiegelsymmetrischen Anordnung der Krafteinleitungsbereiche, die als punktförmige Erhebungen oder Absätze mit einer kleinen Oberfläche ausgebildet sein können, erfolgt neben einer mechanischen Kompensation eingeleiteter Momente eine messtechnische Erfassung unterschiedlicher Verlagerungen, indem jedem Krafteinleitungsbereich ein Messelement zugeordnet ist, so dass die Verteilung der in die Zunge oder die Zungen eingeleiteten Kräfte bestimmt werden kann. Dies erfolgt beispielsweise durch eine sternförmige Anordnung der Zungen oder durch eine Anordnung zweier Messelemente an den einander gegenüberliegenden Ecken der Zungenenden. Bei einer gegenüberliegenden Anordnung der Zungen entsteht somit eine rechteckige oder quadratische Formation der Messelemente und der Krafteinleitungsbereiche, mit der einfach die effektive Gewichtskraft ermittelt werden kann, ohne dass störende Momente auftreten oder berücksichtigt werden müssen.

Eine vorteilhafte Verwendung der Vorrichtung besteht darin, dass sie zur Erkennung der Sitzbelegung und/oder des Insassengewichtes in einem Kraftfahrzeug eingesetzt werden kann, wodurch insbesondere eine Steuerung der Airbagauslösung und/oder eine Anpassung des Füllgrades des Airbags erfolgen kann.

Nachfolgend wird ein Ausführungsbeispiel der Erfindung anhand der Zeichnungen näher erläutert. Es zeigen:
- Figur 1 -: einen Querschnitt einer ersten Ausgestaltung der Vorrichtung;
- Figur 2 -: eine Rückansicht der Vorrichtung nach Fig. 1;
- Figur 3 -: eine Draufsicht auf die Vorrichtung gemäß Fig. 1;
- Figur 4 -: eine Seitenansicht einer zweiten Ausgestaltung der Vorrichtung;
- Figur 5 -: eine Schnittansicht in Zeichenebene der Vorrichtung gemäß Figur 4;
- Figur 6 -: eine Draufsicht auf die Vorrichtung gemäß Fig. 4;
- Figur 7 und 8 -: Schnittansichten senkrecht zur Zeichenebene der Vorrichtung gemäß Fig. 4; und
- Figur 9 -: eine Seitenansicht der Vorrichtung gemäß der Fig. 4.

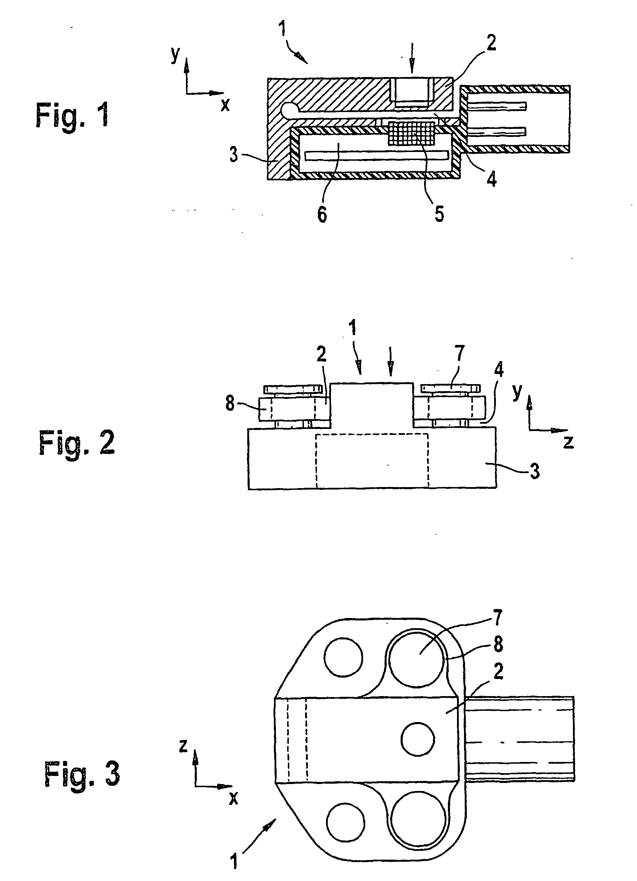

Die Figur 1 zeigt eine geschnittene Darstellung einer ersten Ausgestaltung Vorrichtung 1 zum Messen einer Kraft- oder Momentenkomponente, an der ein Verformungskörper aus einem Basisteil 3 und einer dazu beweglichen Zunge 2 aufgebaut ist. Im vorliegenden Beispiel ist der Verformungskörper einstückig ausgebildet, das heißt, daß das Basisteil 3 und die dazu bewegliche Zunge 2 in einem Ur- oder Umformverfahren oder durch spanende Bearbeitung aus einem Halbzeug hergestellt wurde bzw. daß diese stoffschlüssig miteinander verbunden sind. Innerhalb des Verformungskörpers ist eine Ausnehmung zur Aufnahme einer Meßeinheit 5 und einer Elektronikeinheit 6 ausgebildet, so daß der Verformungskörper zu dem das Gehäuse für das Meßelement 5 und die damit zusammen als Baugruppe ausgebildete Elektronikeinheit 6 bildet. Zwischen der Zunge 2 und dem Basisteil 3 ist ein Spalt 4 ausgebildet, dessen Weite sich in Abhängigkeit von einer in Pfeilrichtung oder entgegen der Pfeilrichtung eingeleiteten Kraft verändert.

Das Meßelement 5, beispielsweise eine Spule mit oder ohne Kern, ein Hallelement, ein Kondensator oder ein ähnliches, berührungsloses Meßelement, mißt die Verkleinerung oder Vergrößerung der Spaltweite und leitet das Meßsignal an die Elektronikeinheit 6 weiter. Von der Elektronikeinheit 6 wird das Meßsignal an eine nicht näher bezeichnete Schnittstelle zur Weiterverorbeitung geleitet.

In der Figur 2 ist in einer Rückansicht die Vorrichtung 1 gezeigt, anhand der die Ausbildung des Spaltes 4 zwischen dem Basisteil 3 und der Zunge 2 erkannt werden kann. Durch Einleitung einer Kraftkomponente in oder entgegen der Y-Richtung verändert sich die Spaltweite und ein entsprechendes Meßsignal kann ermittelt werden.

Zur Begrenzung der Bewegung der Zunge 2 in Y-Richtung ist ein Bolzen 7 vorgesehen, der beispielsweise als ein Schweißbolzen oder eine Schraube ausgebildet sein kann und dementsprechend stoffschlüssig oder formschlüssig mit dem Basisteil 3 verbunden ist. An der Oberseite des Bolzens 7 ist eine pilzförmige Abflachung ausgebildet, die die Bewegung der Zunge 2 in Y-Richtung begrenzt, so daß eine Aufweitung des Spaltes 4 über ein zulässiges oder vorbestimmtes Maß hinaus nicht möglich ist. Der Bolzen 7 durchragt dabei einen Durchlass 8, der durch Ösen ausgebildet ist, die an der Zunge 2 angeformt sind.

Dies wird anhand der Figur 3 deutlich, wo zu sehen ist, daß seitlich an der Zunge 2 zwei Ausformungen ausgebildet sind, die Durchlässe 8 aufweisen, durch die die Schrauben oder Schweißbolzen 7 geführt sind. Diese begrenzen die mögliche Bewegung der Zunge 2 in X-, Y- und Z-Richtung, wobei in negativer Y-Richtung die Begrenzung der Bewegung der Zunge 2 durch das Basisteil 3 erfolgt. Die Vorrichtung wird dadurch überlastfest, das heißt, die Kräfte, die über dem Meßbereich liegen oder in eine nicht gewünschte Richtung zeigen, werden abgefangen, ohne daß die komplette Vorrichtung bzw. das Meßelement 5 zerstört wird. Ebenfalls ist eine zusätzliche Begrenzung der Bewegung der Zunge 2 in negative Y-Richtung vorgesehen, um den maximalen Meßbereich festzulegen, sofern ein Anschlag an dem Basisteil 3 nicht gewünscht ist. Eine solche Begrenzung kann durch Stellschrauben ausgebildet sein, wodurch der Weg der Zunge 2 in allen Richtungen mechanisch begrenzt wird.

Dadurch kann die Vorrichtung unabhängig von der Elektronik durch eine Veränderung der Geometrie auf beliebige Meßbereiche ausgelegt werden, indem beispielsweise der Schraubbolzen 7 hinein- oder herausgeschraubt wird, gleiches gilt für eine Einstellung der Vorrichtung zur Begrenzung der Bewegung der Zunge 2 in Richtung auf das Basisteil 3.

Durch die in den Figuren dargestellte Ausbildung des Verformungskörpers und der Elektronikeinheit 6 zusammen mit dem Meßelement 5 als Baugruppen ist es möglich, eine getrennte Fertigung durchzuführen, wobei der einzige gemeinsame Arbeitsgang das Verbinden der beiden Baugruppen miteinander darstellt. Vorteilhafterweise ist das Meßelement 5 bzw. der Meßaufnehmer ein integrierter Teil der Elektronikeinheit 6, wodurch die Anordnung innerhalb des Verformungskörpers weiter vereinfacht wird. Die Vorrichtung mißt gemäß dem Ausführungsbeispiel lediglich die Kräfte in Y-Richtung, indem der Spaltabstand verändert wird, so daß seitliche Störkräfte in X- und Z-Richtung nicht erkannt oder gemessen werden, wodurch eine präzise Messung der Kraftkomponente in der vorbestimmten Richtung erfolgt.

Alternativ zu der dargestellten einstückigen Ausbildung ist es vorgesehen, die Zunge 2 beispielsweise über ein Schornier an dem Basisteil 3 beweglich zu befestigen und gegebenenfalls mit einer Feder zu belasten, um die Zunge 2 nach Entlastung wieder in die Ausgangsstellung zurückzubewegen.

In einer vorteilhaften Verwendung ist die Vorrichtung zur Erkennung der Sitzbelegung eines Kraftfahrzeuges vorgesehen, wodurch eine unnötige Auslösung eines Airbags verhindert wird. Ebenfalls kann das Insassengewicht bestimmt werden, indem die Vorrichtung oder mehrere Vorrichtungen unter den Sitz eingearbeitet werden, wodurch eine Steuerung des Füllungsgrades des Airbags möglich ist. Je schwerer der Insasse, desto größer ist die benötigte Luftmenge in dem Airbag, um ein sicheres Auffangen des lnsassen zu gewährleisten. Eine Anpassung der Füllmenge des Airbags kann beispielsweise durch eine stufenweise Zündung des Airbags erfolgen. Entsprechend umgekehrt wird eine verringerte Füllmenge benötigt, wenn der Insasse sehr leicht ist.

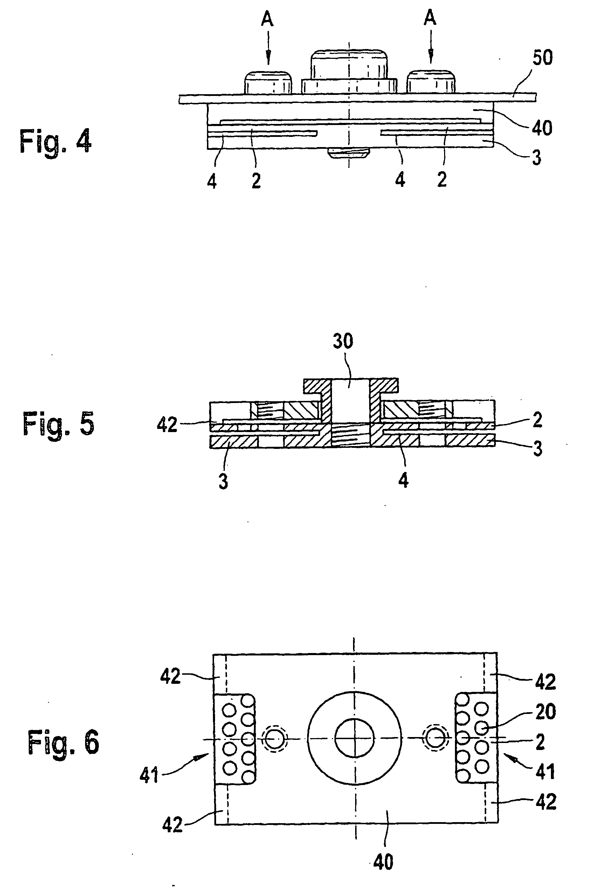

In der Figur 4 ist ein zweites Ausführungsbeispiel der Vorrichtung gezeigt, bei der zwei bewegliche Zungen 2 symmetrisch zu der Mittelachse an dem Basisteil 3 ausgebildet sind. Somit ergeben sich zwischen den beweglichen Zungen 2 und dem Basisteil 3 zwei durch Kraftanleitung veränderbare Spalte 4, wobei in dem dargestellten Ausführungsbeispiel die Krafteinleitung von einer Sitzschiene 50 eines nicht dargestellten Kraftfahrzeugsitzes erfolgt. Sobald sich ein Insasse auf den Kraftfahrzeugsitz setzt, werden über die Befestigungspunkte A Kräfte auf die Sitzschiene 50 und von der Sitzschiene 50 auf eine massive Platte 40 durchgeleitet und auf die beweglichen Zungen 2 übertragen. Die Platte 40 ist unabhängig von dem Basisteil 3 und den beweglichen Zungen 2 ausgebildet und besitzt eine Ausfräsung, so dass die von der Sitzschiene 50 aufgenommenen Kräfte nur an den Außenbereichen der Platte 40 auf die Zungen 2 übertragen wird. Dies wird später näher erläutert werden.

In einer wie oben beschriebenen Art und Weise wird dann die Veränderung der Spaltweite gemessen und in ein elektrisches Signal umgesetzt, das ausgewertet wird.

ln der Figur 5 ist eine Schnittdarstellung der Figur 4 dargestellt, bei der eine Abstandshülse 30 deutlich zu sehen ist, die sich oberhalb der Zungen 2 in der Mitte des Basisteils 3 befindet. Die Abstandshülse 30 wird, wie in der Figur 4 angedeutet, über eine zentral angeordnete Schraube, die eine zentrale Bohrung durchgreift, auf dem Karosserieboden oder einer anderen festen Unterlage befestigt und somit im Verhältnis zu dem Basisteil 3 festgelegt. Die Abstandshülse 30 weist an ihrem oberen Ende einen T-förmigen Kragen auf, dessen Unterkante in einem definierten Abstand zu der Oberkante der Platte 40 befindlich ist. Der T-förmige Kragen bildet einen Anschlag für die Platte 40, falls eine Bewegung in Richtung auf den T-förmigen Kragen im Falle eines Unfalles erfolgt. Unter Bezugnahme auf das in den Figuren 1 bis 3 verwendete Koordinatensystem handelt es sich dann um eine Bewegung in positive Y-Richtung. In Richtung negative Y-Richtung ist die maximale Auslenkbarkeit der beweglichen Zungen 2 durch die Spaltweite gegeben; bei Erreichen und Überschreiten des festgelegten Messbereiches liegt die Zunge 2 auf dem Basisteil 3 auf und verhindert, dass das nicht dargestellte Messelement zerstört wird.

Die Figur 6 zeigt eine Draufsicht auf die Vorrichtung gemäß der Figur 4, bei der die Sitzschiene 50 entfernt wurde, so dass die Platte 40 zu sehen ist. In der Platte 40 sind rechts und links der Mittelachse Aussparungen 41 eingearbeitet, durch die einerseits der Blick auf die darunter liegende Zunge 2 möglich ist und die andererseits eine Ausbildung von Krafteinleitungsbereichen 42 bewirken. Parallel zu den Seitenkanten der Platte 40 ist ein in den Darstellungen der Figuren 4 und 5 andeutungsweise zu erkennender Steg ausgebildet, der von den Ausnehmungen 41 unterbrochen wird, so dass an allen vier Ecken der Platte 40 rechteckige Krafteinleitungsbereiche 42 ausgebildet werden, die auf die Zungenenden einwirken. Bei Einleitung einer Kraft auf die Platte 40 wird diese in alle vier Ecken der Platte verteilt und über die Krafteinleitungsbereiche 42 auf die Ecken der beiden einander gegenüberliegenden Zungen 2 eingeleitet. Auf diese Art und Weise wird eine spätere elektronische Kompensation ermöglicht. Durch die Zwischenschaltung der Platte 40 ist zudem eine leichtere Befestigung beispielsweise der Sitzschiene 50 möglich, da die Platte 40 massiv ausgebildet ist und somit gute Befestigungsmöglichkeiten bietet.

Weiterhin sind in der Figur 6 Bohrungen 20 zu erkennen, die in der beweglichen Zunge 2 ausgebildet sind und die zu einer Schwächung des Materials und damit zu einer Herabsetzung der Biegefestigkeit der in dem vorliegenden Ausführungsbeispiel angeformten elastischen Zunge 2 führen. Durch eine Veränderung der Anzahl und Anordnung der Bohrungen 20 bzw. durch eine Vergrößerung des Bohrungsquerschnittes können Anpassungen an den Messbereich vorgenommen werden.

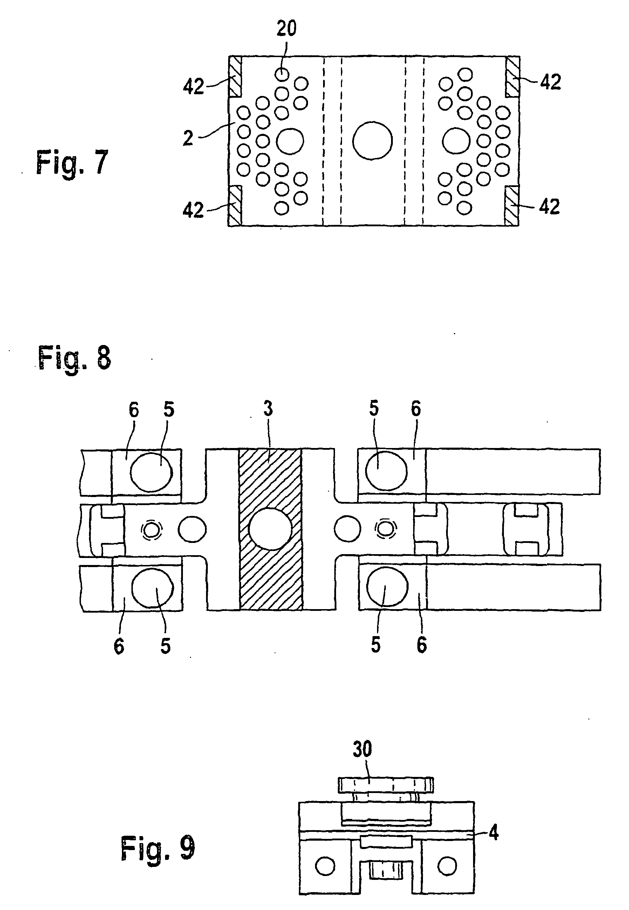

In der Figur 7 ist eine Darstellung eines Schnittes senkrecht zu der Zeichenebene gezeigt, der durch den unteren Bereich der Platte 40 gelegt ist, so dass die Krafteinleitungsbereiche 42 erfasst sind. Diese sind in der Figur 7 dementsprechend schraffiert gezeichnet: die übrige Darstellung zeigt die elastischen Zungen 2 sowie die in der Zunge 2 angeordneten Bohrungen. Hier wird deutlich, dass die Krafteinleitungsbereiche 42 spiegelsymmetrisch angeordnet sind, so dass eine elektronische Kompensation der eingeleiteten Kräfte unter Vermeidung störender Drehmomente ermöglicht wird.

Die Figur 8 zeigt eine Darstellung eines Schnittes senkrecht zur Zeichenebene durch den Spalt 4, so dass der Mittelsteg des Basisteils 3 schraffiert dargestellt ist. Anhand der Figur 8 wird deutlich, dass unterhalb jedes Krafteinleitungsbereiches 42 ein Messelement 5 mit einer aktiven Fläche sitzt, das die Veränderung der Spaltweite ermittelt und an eine Elektronikeinheit 6 weiterleitet, die die entsprechenden Signale umsetzt und auswertet. Alternativ zu der dargestellten Ausführung mit vier separaten Messeinheiten ist es vorgesehen, diese einstückig auf einer Leiterplatte anzuordnen, wobei die Messelemente, z. B. als gedruckte Spulen vorzugsweise auf der Leiterplatte (Kunststoff, Keramik etc.) ausgefertigt werden. Messelement und Elektronikeinheit sind somit zu einer Baugruppe integriert, wodurch die Fertigung und Montage vereinfacht wird.

ln der Figur 9 ist eine Seitenansicht der Figur 4 dargestellt, aus der die Befestigung der Messelemente und der Elektronikeinheit 6 unterhalb der Zungen 2 und der durch die Zungen 2 ausgebildeten Spalte 4 dargestellt ist.

Wie aus den Figuren 4 bis 9 deutlich wird, kann der Verformungskörper aus mehreren, separaten Teilen, nämlich einer Platte 40 sowie einem Basisteil 3 und daran angeformten elastischen Zungen 2 bestehen. Alternativ zu einer zweiteiligen Ausgestaltung kann die Zunge bzw. können die Zungen 2 ebenfalls separat von dem Basisteil 3 gefertigt werden und im Rahmen der Montage durch die zentrale Befestigungsschraube zusammengefügt werden. Abweichend zu der dargestellten Ausführung ist es möglich, dass keine zu der Zunge 2 parallele Anschlagfläche eines Basisteiles 3 ausgebildet ist, sondem dass der Spalt unmittelbar zwischen einem separaten Messelement 5 und der Zunge 2 ausgebildet ist, wobei eine Begrenzung in Richtung negative Y-Richtung durch eine separate Vorrichtung, beispielsweise einen gesonderten Anschlag erfolgt,

Der Verformungskörper besteht vorzugsweise aus Metall und ist über eine Mittelschraube vorzugsweise am Fahrzeugboden fixiert. Die Befestigungsschraube fixiert über die Abstandshülse 30 das Basisteil 3 mit den angeformten Zungen 2 auf dem Fahrzeugboden und bewirkt eine Zuordnung der Platte 40 zu den Zungen 2.

## Patentansprüche

1. Vorrichtung zur Messung einer Kraft- oder Momentenkomponente, mit einem Verformungskörper und einem separaten Messelement (5) zur Erfassung zumindest einer Kraftkomponente sowie einer mit dem Messelement (5) verbundenen Elektronikeinheit (6) zur Auswertung eines Messsignals von dem Messelement (5), wobei der Verformungskörper ein Basisteil (3) und zumindest eine zu dem Basisteil (3) bewegliche Zunge (2) aufweist, dass das Basisteil (3) so ausgebildet ist, dass zwischen dem Messelement (5) und der Zunge (2) ein Spalt (4) dergestalt ausgebildet ist, dass die Spaltweite bei Einleiten der Kraftkomponente auf den Verformungskörper veränderbar ist, wobei das Messelement (5) die Veränderung der Spaltweite in ein Messsignal umsetzt, **dadurch gekennzeichnet, dass** zwei Zungen (2) spiegelsymmetrisch zueinander an dem Basisteil (3) angeordnet sind.

2. Vorrichtung nach Anspruch 1, **dadurch gekennzeichnet, dass** der Verformungskörper und das Messelement (5) mit der Elektronikeinheit (6) als getrennte Baugruppen ausgebildet sind.

3. Vorrichtung nach Anspruch 1 oder 2, **dadurch gekennzeichnet, dass** das Messelement (5) mit der Elektronikeinheit (6) von dem Verformungskörper mindestens teilweise umschlossen sind.

4. Vorrichtung nach einem der voranstehenden Ansprüche, **dadurch gekennzeichnet, dass** das Messelement (5) ein integraler Bestandteil der Elektronikeinheit (6) ist.

5. Vorrichtung nach einem der voranstehenden Ansprüche, **dadurch gekennzeichnet, dass** der Verformungskörper einstückig aus dem Basisteil (3) und der Zunge (2) ausgebildet ist.

6. Vorrichtung nach einem der vorhergehenden Ansprüche, **dadurch gekennzeichnet, dass** zumindest eine Führungseinrichtung (7, 8) vorgesehen ist, die die Beweglichkeit der Zunge (2) in zumindest einer Richtung begrenzt.

7. Vorrichtung nach Anspruch 6, **dadurch gekennzeichnet, dass** die Führungseinrichtung aus einem mit dem Basisteil (3) verbundenen, senkrecht zu dem Basisteil
(3) angeordneten Bolzen (7) und einem an der Zunge (2) angeordneten oder ausgebildeten Durchlass (8), der von dem Bolzen (7) zumindest teilweise durchragt wird, besteht.

8. Vorrichtung nach einem der voranstehenden Ansprüche, **dadurch gekennzeichnet, dass** eine Vorrichtung zur Begrenzung der Bewegung der Zunge (2) in Richtung auf das Messelement (5) oder von dem Messelement (5) weg vorgesehen ist.

9. Vorrichtung nach Anspruch 8, **dadurch gekennzeichnet, dass** die Vorrichtung zur Begrenzung der Bewegung an dem Verformungskörper, dem Basisteil (3) oder an der Zunge (2) vorgesehen ist.

10. Vorrichtung nach einem der voranstehenden Ansprüche, **dadurch gekennzeichnet, dass** die Spaltweite oder die Biegesteifigkeit der Zunge (2) an den Messbereich anpassbar ist.

11. Vorrichtung nach Anspruch 1, **dadurch gekennzeichnet, dass** die Enden der Zungen (2) in einander entgegengesetzte Richtungen weisen.

12. Vorrichtung nach einem der voranstehenden Ansprüche, **dadurch gekennzeichnet, dass** Krafteinleitungsbereiche (42) zur definierten Einleitung der Kraft in die Zungen (2) ausgebildet sind.

13. Vorrichtung nach Anspruch 12, **dadurch gekennzeichnet, dass** die Krafteinleitungsbereiche (42) spiegelsymmetrisch zueinander angeordnet sind.

14. Vorrichtung nach Anspruch 12 oder 13, **dadurch gekennzeichnet, dass** jedem Krafteinleitungsbereich (42) ein Messelement (5) zugeordnet ist

## Claims

1. Device for measuring a force component or a torque component, having a deformation element and a separate measuring element (5) for sensing at least one force component and an electronic unit (6) which is connected to the measuring element (5) and has the purpose of evaluating a measurement signal from the measuring element (5), wherein the deformation element has a base part (3) and at least one tongue (2) which can move in relation to the base part (3), in that the base part (3) is embodied in such a way that a gap (4) is formed between the measuring element (5) and the tongue (2) in such a way that the gap width can be varied when the force component is applied to the deformation element, wherein the measuring element (5) converts the change in the gap width into a measurement signal, **characterized in that** two tongues (2) are arranged in a mirror-symmetrical fashion with respect to one another on the base part (3).

2. Device according to Claim 1, **characterized in that** the deformation element and the measuring element (5) with the electronic unit (6) are embodied as separate assemblies.

3. Device according to Claim 1 or 2, **characterized in that** the measuring element '(5) with the electronic unit (6) are at least partially surrounded by the deformation element.

4. Device according to one of the preceding claims, **characterized in that** the measuring element (5) is an integral component of the electronic unit (6).

5. Device according to one of the preceding claims, **characterized in that** the deformation element is formed integrally from the base part (3) and the tongue (2).

6. Device according to one of the preceding claims, **characterized in that** at least one guide device (7, 8), which limits the mobility of the tongue (2) in at least one direction, is provided.

7. Device according to Claim 6, **characterized in that** the guide device is composed of a bolt (7) which is connected to the base part (3) and is arranged perpendicularly with respect to the base part (3), and of a passage (8) which is arranged or formed on the tongue (2) and through which the bolt (7) at least partially projects.

8. Device according to one of the preceding claims, **characterized in that** a device is provided for limiting the movement of the tongue (2) in the direction of the measuring element (5) or in the direction away from the measuring element (5).

9. Device according to Claim 8, **characterized in that** the device for limiting the movement is provided on the deformation element, the base part (3) or on the tongue (2).

10. Device according to one of the preceding claims, **characterized in that** the gap width or the flexural strength of the tongue (2) can be adapted to the measuring range.

11. Device according to Claim 1, **characterized in that** the ends of the tongues (2) point in opposite directions.

12. Device according to one of the preceding claims, **characterized in that** force application areas (42) for applying the force to the tongues (2) in a defined fashion are formed.

13. Device according to Claim 12, **characterized in that** the force application areas (42) are arranged in a mirror-symmetrical fashion with respect to one another.

14. Device according to Claim 12 or 13, **characterized in that** a measuring element (5) is assigned to each force application area (42).

## Revendications

1. Dispositif pour mesurer une composante de force ou de moment, comprenant un corps de déformation et un élément de mesure séparé (5) pour l'enregistrement d'au moins une composante de force ainsi qu'une unité électronique (6) reliée à l'élément de mesure (5) pour l'exploitation d'un signal de mesure provenant de l'élément de mesure (5), le corps de déformation présentant une partie de base (3) et au moins une languette (2) mobile par rapport à la partie de base (3), et la partie de base (3) est configurée de telle sorte qu'entre l'élément de mesure (5) et la languette (2) se trouve une fente (4), formée de telle sorte que la largeur de la fente est variable lors de l'application de la composante de force sur le corps de déformation, l'élément de mesure (5) convertissant alors la variation de la largeur de la fente en un signal de mesure,
**caractérisé en ce que**
deux languettes (2) sont disposées de façon symétrique au niveau de la partie de base (3).

2. Dispositif selon la revendication 1,
**caractérisé en ce que**
le corps de déformation et l'élément de mesure (5) avec l'unité électronique (6) sont configurés sous forme de modules séparés.

3. Dispositif selon la revendication 1 ou 2,
**caractérisé en ce que**
l'élément de mesure (5) avec l'unité électronique (6) sont au moins partiellement entourés par le corps de déformation.

4. Dispositif selon l'une des revendications précédentes,
**caractérisé en ce que**
l'élément de mesure (5) est un composant intégré dans l'unité électronique (6).

5. Dispositif selon l'une des revendications précédentes,
**caractérisé en ce que**
le corps de déformation est configuré d'une seule pièce et comprend la pièce de base (3) et la languette (2).

6. Dispositif selon l'une des revendications précédentes,
**caractérisé en ce qu'**
au moins un dispositif de guidage (7, 8) est prévu pour limiter la mobilité de la languette (2) dans au moins une direction.

7. Dispositif selon la revendication 6,
**caractérisé en ce que**
le dispositif de guidage se compose d'un boulon (7) relié à la partie de base (3) et disposé perpendiculairement à la partie de base (3) et d'un passage (8) disposé ou configuré au niveau de la languette (2), qui est au moins partiellement traversée par le boulon (7).

8. Dispositif selon l'une des revendications précédentes,
**caractérisé en ce qu'**
il est prévu un dispositif de limitation du mouvement de la languette (2) en direction de l'élément de mesure (5) ou en s'éloignant de l'élément de mesure (5).

9. Dispositif selon la revendication 8,
**caractérisé en ce que**
le dispositif de limitation du mouvement est prévu au niveau du corps de déformation, de la partie de base (3) ou de la languette (2).

10. Dispositif selon l'une des revendications précédentes,
**caractérisé en ce que**
la largeur de la fente ou la résistance à la flexion de la languette (2) peuvent être adaptées à la plage de mesure.

11. Dispositif selon la revendication 1,
**caractérisé en ce que**
les extrémités des languettes (2) sont orientées dans des directions opposées.

12. Dispositif selon l'une des revendications précédentes,
**caractérisé en ce que**
les zones d'application des forces (42) sont configurées pour permettre une application définie de la force dans les languettes (2).

13. Dispositif selon la revendication 12,
**caractérisé en ce que**
les zones d'application des forces (42) sont disposées de façon symétrique.

14. Dispositif selon la revendication 12 ou 13,
**caractérisé en ce qu'**
un élément de mesure (5) est associé à chaque zone d'application des forces (42).
